# EUROPÄISCHE PATENTSCHRIFT

(11) **EP 0 405 002 B1**
(45) Veröffentlichungstag und Bekanntmachung des Hinweises auf die Patenterteilung: **08.12.1993**
(21) Anmeldenummer: 89111996.8
(22) Anmeldetag: 30.06.1989
(51) Int. Cl.: H02K 5/10, H02K 5/22

(54) **Elektrischer Aussenläufermotor**
Electric external rotor motor
Moteur électrique à rotor extérieur

(43) Veröffentlichungstag der Anmeldung: 02.01.1991
(73) Patentinhaber: Jakob, Karl, Dipl.-Ing.(FH), D-85598 Baldham (DE)
(72) Erfinder: Jakob, Karl, Dipl.-Ing.(FH), D-85598 Baldham (DE)
(74) Vertreter: Körner, Ekkehard, Dipl.-Ing.

(56) Entgegenhaltungen:
- EP-A- 0 290 748
- DE-A- 2 536 094
- DE-C- 3 635 297
- GB-A- 837 779

## Beschreibung

Die Erfindung bezieht sich auf einen elektrischen Außenläufermotor nach dem Oberbegriff des Anspruchs 1. Ein Außenläufermotor dieser Art ist aus EP-A-0 290 748 bekannt.

Ein erheblicher Nachteil besteht darin, daß ein solcher Motor nicht wasserdicht gemäß den Schutzarten IP66 bzw. IP68 ist, weil die Lippenringdichtung unter herrschendem statischem hydraulischem Außendruck im Betrieb Schaden nehmen kann. Der Erfindung liegt die Aufgabe zugrunde, einen Außenläufermotor der eingangs genannten Art anzugeben, der einfach montiert und demontiert werden kann und der in wasserdichter Schutzart gemäß IP66 bzw. IP68 ausgeführt werden kann.

Diese Aufgabe wird durch die Merkmale des Anspruchs 1 gelöst. Vorteilhafte Ausgestaltungen der Erfindung sind Gegenstand der Unteransprüche.

Bei dem erfindungsgemäßen Außenläufermotor ist die Lippenringdichtung, an der feststehende und bewegliche Teile gegeneinander abgedichtet sind, in bekannter Weise in den achsnahen Bereich des Motors verlegt, Die radial außerhalb dieser Lippenringdichtung zwischen feststehender Montageplatte und rotierender Verschlußplatte ausgebildete Labyrinthanordnung vermindert von außen auf die Dichtungslippe der Lippenringdichtung einwirkenden hydraulischen oder pneumatischen Druck ausreichend. Da die Verschlußplatte mit der Außenläuferglocke fest verbunden ist, kann zwischen diesen beiden Teilen unschwierig, beispielsweise mittels einer O-Ringdichtung, ein dichter Abschluß erzielt werden.

Ein weiterer Vorteil der Erfindung besteht darin, daß die Außenläuferglocke vollständig von dem Motor demontiert werden kann, ohne daß es dazu notwendig ist, den Ständer zu demontieren oder gar den gesamten Motor von der ihn tragenden Struktur abzubauen. Es ist lediglich notwendig, die Verbindung zwischen der Verschlußplatte und der Außenläuferglocke, die beispielsweise mittels Schrauben hergestellt ist, zu lösen. Anschließend steht der Ständer zur Inspektion frei, und es ist weiterhin möglich, den Ständer zu demontieren, ohne daß es eines Abbaus der verbliebenen Motorteile von der tragenden Struktur bedarf. Dennoch kann der Motor in vollständig montiertem Zustand an der tragenden Struktur befestigt und von dieser gelöst werden.

Die Erfindung wird nachfolgend unter Bezugnahme auf ein in den Zeichnungen dargestelltes Ausführungsbeispiel näher erläutert.

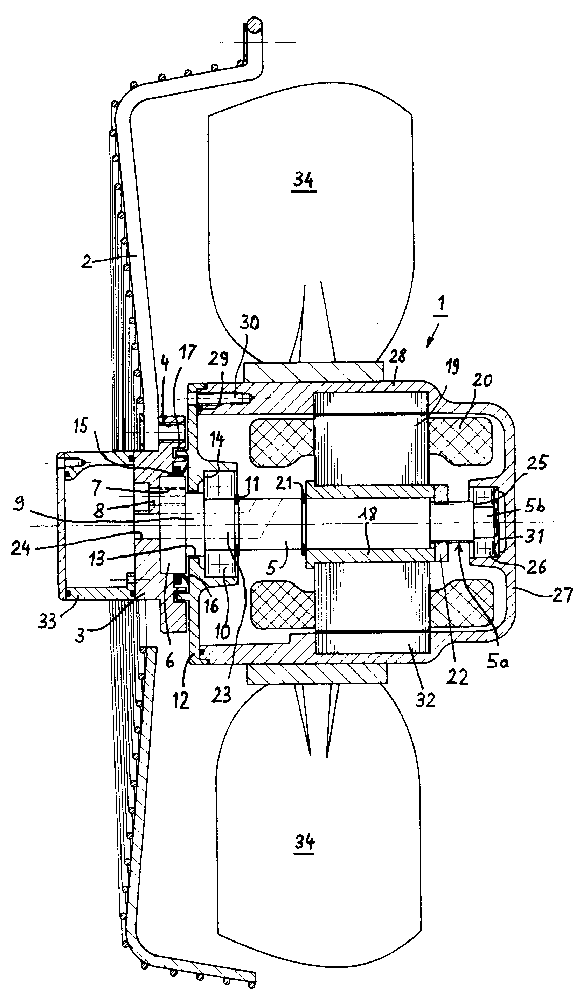

Die Zeichnung zeigt im Axialschnitt einen Außenläufermotor 1 montiert an einem Schutzgitter 2 als tragender Struktur.

Man erkennt in der Zeichnung eine Montageplatte 3, die in einer Aussparung des Schutzgitters 2 mittels mehrerer Schrauben (nicht dargestellt), die in Gewindebohrungen 4 eingeschraubt sind, befestigt ist. An der Montageplatte 3 ist mittels mehrerer Schrauben eine Welle 5 befestigt, die am einen Ende einen verbreiterten ringförmigen Montageflansch 6 trägt, in welchem mehrere Gewindebohrungen 7 ausgebildet sind, in die die Schrauben (nicht dargestellt) eingeschraubt sind, die, Bohrungen 8 in der Montageplatte 3 durchdringend, in die Gewindebohrungen 7 eingeschraubt sind.

Die Welle 5 weist benachbart dem Montageflansch 6 einen Bund 9 auf, dessen Durchmesser kleiner als der Montageflansch 6, jedoch größer als der Durchmesser der Welle 5 ist. An der dadurch gebildeten Schulter liegt seitlich ein erstes Rollenlager 10 an. Dieses Rollenlager 10 ist durch einen Seegerring 11 in axialer Richtung zwischen der vorgenannten Schulter und dem Seegerring 11 festgelegt. Der Seegerring 11 sitzt in einer Nut in der Welle 5.

Das erste Rollenlager 10, vorzugsweise ein Kugellager mit einer inneren und einer äußeren Lagerschale, sitzt in einer verschlußplatte 12, die eine Bohrung 13 aufweist, die von dem genannten Bund 9 der Welle 5 durchdrungen wird. Die Verschlußplatte 12 hat eine seitliche Schulter 14, an der die äußere Lagerschale des Rollenlagers 10 seitlich anliegt.

Auf dem Montageflansch 6 befindet sich eine Lippenringdichtung 15, die sich an dem Montageflansch 6 und der Montageplatte 3 abstützt und deren Dichtungslippe 16 seitlich an der Außenseite der Verschlußplatte 12 anliegt. An der Montageplatte 3 ist ferner radial außerhalb der Lippenringdichtung 15 eine konzentrische Ringnut ausgebildet, in die ein dazu passender konzentrischer ringförmiger Vorsprung an der Verschlußplatte 12 eingreift, sodaß dadurch ein Labyrinthgang 17 zwischen der äußeren Umgebung und dem Raum gebildet wird, in welchem die Lippenringdichtung 15 angeordnet ist. Dieser Labyrinthgang 17 dient dem Abbau von außen auf die Dichtungslippe 16 wirkenden Fluiddrucks.

Es ist somit zu erkennen, daß die Welle 5 über den Montageflansch 6 von der Montageplatte 3 feststehend, d.h. nicht rotierend, gehalten wird, während die Verschlußplatte 12 auf der Welle 5 drehbar gelagert ist.

Auf der Welle 5 ist fernerhin ein Ständer drehfest angebracht, bestehend aus einem Trägerkörper 18, der ein Dynamoblechpaket 19 durchdringt, und einer Ständerwicklung 20. Der Trägerkörper 18 ist einenends im dargestellten Beispiel mittels eines weiteren Seegerringes 21 und anderenends mittels einer Mutter 22 auf der Welle 5 festgelegt, zu welchem Zweck die Welle 5 im Bereich des zweiten Endes des Trägerkörpers 18 einen Gewindeabschnitt 5a aufweist, auf den die Mutter 22 aufgeschraubt ist. Zwischen der Mutter 22 und dem Trägerkörper 18 kann ggf. ein sichernder Federring angeordnet sein, der hier aus Übersichtlichkeitsgründen nicht dargestellt ist.

Die Welle 5 weist eine axiale Bohrung 23 auf, die gestrichelt eingezeichnet ist und sich seitlich über eine Querbohrung in den Innenraum des Motors öffnet. Mit der Bohrung 23 fluchtet eine Bohrung 24 in der Trägerplatte 3. Diese Bohrungen dienen der Durchleitung von Anschlußleitungen für die ständerwicklung 20.

Am freien Ende weist die Welle 5 einen Abschnitt 5b verminderten Durchmessers auf, der eine Schulter 25 ausbildet, an der seitlich ein zweites Rollenlager 26 abgestützt ist, das beispielsweise ebenfalls ein Kugellager mit innerer und äußerer Lagerschale sein kann, wobei die innere Lagerschale an der genannten Schulter 25 anliegt. Dieses zweite Kugellager 26 trägt den Boden 27 einer Außenläuferglocke 28, die mit dem Boden 27 zu einer integralen Einheit vereinigt ist und die mit der Verschlußplatte 12 am Rand ihres offenen Endes unter Zwischenlage einer O-Ringdichtung 29 mittels einer Reihe von Schrauben 30 fest verbunden ist. Der Glockenboden 27 stützt das zweite Rollenlager 26 über einen axial wirkenden Federring 31 in axialer Richtung ab, sodaß nach erfolgter Montage der aus der Verschlußplatte 12, der Außenläuferglocke 28 und dem Glockenboden 27 bestehende Außenläufer durch den Bund 9, die Schulter 14, das erste Rollenlager 10, den ersten Seegerring 11, die Schulter 25, die Federscheibe 31 und den Glockenboden 27 in axialer Richtung gegenüber der Welle 5 festgelegt ist.

Im dargestellten Beispiel sind an der Innenseite der Außenläuferglocke 28 umgossene Dynamobleche mit Kurzschlußstäben (nicht dargestellt) befestigt.

Es ist ferner anzumerken, daß der Trägerkörper 18 und die Welle 5 drehfest miteinander verbunden sind, beispielsweise durch eine Nutkeilverbindung mit Paßfeder bekannter Bauart. Außerdem ist zu erwähnen, daß die Zeichnung links von dem Schutzgitter 2 einen Anschlußkasten 33 zeigt, der an der Montageplatte 3 befestigt ist.

Auf der Außenläuferglocke 28 sind im dargestellten Beispiel mehrere Ventilatorflügel 34 befestigt. Es sei jedoch betont, daß der hier dargestellte Motor auch für beliebige andere Zwecke eingesetzt werden kann.

Aufgrund der dargestellten Konstruktion ist der Motor insgesamt wasserdicht. Er kann ohne weitere Maßnahmen unter Wasser betrieben werden, ohne daß Gefahr besteht, daß Wasser in den Innenraum des Motors eindringt. Die dargestellte Dichtungskonstruktion aus dem Labyrinthgang 17 und der Lippenringdichtung 15 beugt einem Eindringen von Wasser in den Innenraum des Motors wirksam vor, wobei aufgrund der örtlichen Lage die Lippenringdichtung auch dagegen schützt, daß Wasser von außen durch die Gewindebohrungen in den Anschlußkasten 33 eindringen kann, denn die Gewindebohrungen 7 liegen innerhalb des von der Lippenringdichtung 15 abgedichteten Bereiches. Fernerhin sind auch beide Rollenlager geschützt.

Der Zusammenbau dieses Motors vollzieht sich in der Weise, daß nach Montage des Flansches 6 an der Montageplatte 3 die Lippenringdichtung 15 angebracht, die Verschlußplatte 12 aufgesteckt, das erste Rollenlager 10 angebracht und mit dem ersten Seegerring 11 gesichert wird. Anschließend wird der zweite Seegerring 21 auf der Welle 5 montiert, und es wird sodann der aus dem Trägerkörper 18, dem Dynamoblechpaket 19 und der Wicklung 20 bestehende Ständer auf die Welle 5 aufgesteckt (nach Anbringung einer Paßfeder) und mit Hilfe der Mutter 22 darauf gesichert. Sodann wird das zweite Rollenlager 26 auf den Endabschnitt 5b der Welle 5 aufgesteckt und anschließend die Außenläuferglocke 28 über die Gesamtanordnung gestülpt und mit Hilfe der Schrauben 30 an der Verschlußplatte 12 befestigt. Die Demontage erfolgt in umgekehrter Reihenfolge.

Es ist anzumerken, daß das erste Rollenlager 10 ggf. an der Verschlußplatte 12 und das zweite Rollenlager 26 an dem Glockenboden 27 vormontiert sein können.

Es ist ferner anzumerken, daß der Wellenabschnitt, auf welchem sich der Trägerkörper 18 befindet, ggf. verminderten Durchmesser haben kann bei entsprechend vermindertem Innendurchmesser des Trägerkörpers 18, sodaß auf der Welle 5 eine weitere Schulter ausgebildet wird, die die Funktion des in der Zeichnung dargestellten zweiten Seegerringes 21 übernimmt. Da die vorstehenden Erläuterungen ausreichend anschaulich sind, kann auf eine zeichnerische Darstellung dieser Modifikation verzichtet werden.

Es ist festzustellen, daß die Verschlußplatte bei der vorliegenden Erfindung zugleich einen Lagerschild für den Außenläufer darstellt, während sie bei bekannten Konstruktionen keine tragende Funktion ausübt.

## Patentansprüche

1. Elektrischer Außenläufermotor, enthaltend eine Welle (5), die mit einer feststehenden Montageplatte (3) starr verbunden ist, einen von der Welle (5) durchdrungenen Ständer mit einem darauf befestigten Dynamoblechpaket (19) mit einer Ständerwicklung (20), eine Außenläuferglocke (28), die einenends von einem mit ihr fest verbundenen Glockenboden (27) abgeschlossen ist, auf der Welle (5) drehbar mittels des Glockenbodens (27) gelagert und gegenüber dem Ständer gegen axiale Verschiebung gesichert ist, und eine mit einer Dichtungseinrichtung (15,17) versehene Verschlußplatte (12), die mit der Außenläuferglocke (28) drehfest verbunden ist, das andere Ende der Außenläuferglocke (28) verschließt und eine zentrale Bohrung (13) aufweist, die von der Welle (5) durchdrungen ist, und die mittels einer sich an der aus Welle (5) und Montageplatte (3) bestehenden, feststehenden Baugruppe abstützenden Lippenringdichtung (15) nach außen abgedichtet ist, **dadurch gekennzeichnet**, daß das Dynamoblechpaket (19) auf einem auf der Welle (5) drehfest angebrachten Trägerkörper (18) angeordnet ist und daß in radialer Richtung außerhalb der Lippenringdichtung (15) zwischen der Montageplatte (3) und der Verschlußplatte (12) ein Labyrinthgang (17) zum Abbau von hydraulischem oder pneumatischem Druck auf die Lippenringdichtung (15) ausgebildet ist.

2. Außenläufermotor nach Anspruch 1, dadurch gekennzeichnet, daß die Verschlußplatte (12) am freien Rand der Außenläuferglocke (28) unter Zwischenlage einer Ringdichtung (29) festgeschraubt ist (30).

3. Außenläufermotor nach einem der vorhergehenden Ansprüche, dadurch gekennzeichnet, daß die Welle (5) und der Trägerkörper (18) durch eine Nutkeilverbindung drehfest miteinander verbunden sind, der Trägerkörper (18) an seinem einen Ende von einer von der Welle (5) vorstehenden Schulter (21) in axialer Richtung abgestützt ist und die Welle (5) im Bereich des anderen Endes des Trägerkörpers einen Gewindeabschnitt (5a) aufweist, auf den eine Mutter (22) aufgeschraubt ist, die den Trägerkörper (18) zwischen sich und der genannten Schulter (21) auf der Welle (5) festlegt.

4. Außenläufermotor nach Anspruch 3, dadurch gekennzeichnet, daß die genannte Schulter von einem auf der Welle (5) befestigten zweiten Seegerring (21) gebildet ist.

## Claims

1. Electric external rotor motor, comprising a shaft (5), rigidly connected to a stationary mounting plate (3), a stator penetrated by the shaft (5)and comprising a dynamo sheet package mounted thereon having a stator winding (20), an external rotor bell (28) closed on one end by a bell base (27) fixedly connected to it and rotatably supported on the shaft (5) by means of the bell base (27) and secured in respect to the stator against axial displacement, and a closure plate (12) provided with a sealing means (15, 17) and fixedly connected to the external rotor bell (28) for co-rotation, said closure plate closing the other end of the external rotor bell (28) and comprising a central bore (13), penetrated by the shaft (5) and sealed to the outside by means of a lip ring seal (15) supported at the fixed assembly consisting of the shaft (5) and the mounting plate (3), **characterized in that** the dynamo sheet package (19) is disposed on a carrier body (18) fixedly mounted on the shaft (5), and that in radial direction outside the lip ring seal (15) between the mounting plate (3) and the locking plate (12) a labyrinth passage (17) is formed for reducing hydraulic or pneumatic pressure on the lip ring seal (15).

2. External rotor motor according to claim 1, **characterized in that** the closure plate (12) is fixed at the free end of the external rotor bell (28) by means of screws (30) using a ring seal (29) as an intermediate layer.

3. External rotor motor according to one of the preceding claims, **characterized in that** the shaft (5) and the carrier body (18) are fixedly connected to one another by a slot wege connection, that the carrier body (18) is supported at its free end by a shoulder (21) projecting from the shaft (5) in axial direction and that the shaft (5) comprises a thread section (5a) in the region of the other end of the carrier body (18), on which a nut (22) is screwed on, fixing the carrier body (18) between itself and said shoulder (21) on the shaft.

4. External rotor motor according to claim 3, **characterized in that** said shoulder is formed by a second Seeger circlip ring (21) mounted on the shaft (5).

## Revendications

1. Moteur électrique à induit extérieur, comprenant un arbre (5), relié rigidement à une plaque de montage (3) fixe, un stator, traversé par l'arbre (5) et comportant un empilement de tôles pour dynamo (19) fixé sur lui et pourvu d'un enroulement de stator (20), une cloche d'induit extérieur (28), qui est fermée à une extrémité par un fond de cloche (27) qui en est solidaire à demeure, qui est montée rotative sur l'arbre (5) au moyen de ce fond de cloche (27) et qui est immobilisée contre tout déplacement axial vis-à-vis du stator, et une plaque de fermeture (12), pourvue d'un dispositif d'étanchéité (15, 17), qui est calée en rotation sur la cloche d'induit extérieur (28), ferme l'autre extrémité de cette cloche d'induit extérieur (28) et présente un passage cylindrique central (13) qui est traversé par l'arbre (5) et dont l'étanchéité vis-à-vis de l'extérieur est assurée au moyen d'une bague d'étanchéité à lèvre (15) prenant appui sur le groupe structurel fixe constitué par l'arbre (5) et la plaque de montage (3), caractérisé en ce que l'empilement de tôles pour dynamo (19) est disposé sur un corps de support (18) calé en rotation sur l'arbre (5) et en ce qu'un passage en labyrinthe (17), servant à réduire la pression hydraulique ou pneumatique s'exerçant sur la bague d'étanchéité à lèvre (15), est réalisé à l'extérieur de la bague d'étanchéité à lèvre (15) dans le sens radial, entre la plaque de montage (3) et la plaque de fermeture (12).

2. Moteur à induit extérieur suivant la revendication 1, caractérisé en ce que la plaque de fermeture (12) est vissée (30) sur le bord libre de la cloche d'induit extérieur (28) avec interposition d'une bague d'étanchéité (29).

3. Moteur à induit extérieur suivant l'une des revendications précédentes, caractérisé en ce que l'arbre (5) et le corps de support (18) sont rendus solidaires en rotation l'un de l'autre par une liaison par rainure et clavette, en ce qu'à l'une de ses extrémités, le corps de support (18) est en appui en direction axiale contre un épaulement (21) en saillie sur l'arbre (5) et en ce que, dans la zone de l'autre extrémité du corps de support, l'arbre (5) comporte une section filetée (5a) sur laquelle est vissé un écrou (22) qui immobilise le corps de support (18) sur l'arbre (5), entre lui et ledit épaulement (21).

4. Moteur à induit extérieur suivant la revendication 3, caractérisé en ce que ledit épaulement est formé par un second anneau de retenue (21) fixé sur l'arbre (5).
